# EUROPEAN PATENT SPECIFICATION

(11) **EP 3 360 357 B1**
(45) Date of publication and mention of the grant of the patent: **06.01.2021**
(21) Application number: 16775348.2
(22) Date of filing: 20.09.2016
(51) Int. Cl.: H04W 12/02, H04L 29/06, H04W 36/00, H04W 12/04, H04W 12/08, H04W 12/10, H04W 12/00

(54) **A RADIO ACCESS NODE AND A METHOD OF OPERATING THE SAME**
FUNKZUGANGSKNOTEN UND VERFAHREN ZUM BETREIBEN DESSELBEN
NOEUD D'ACCÈS RADIO ET SON PROCÉDÉ DE FONCTIONNEMENT

(30) Priority: 08.10.2015 US 201562239062 P
(43) Date of publication of application: 15.08.2018
(73) Proprietor: Telefonaktiebolaget LM Ericsson (PUBL), 164 83 Stockholm (SE)
(72) Inventor: AXÉN, Rasmus, SE-583 36 Linköping (SE); JOHANSSON, Stefan, 587 52 Linköping (SE); NORRMAN, Karl, SE-116 28 Stockholm (SE)
(74) Representative: Zacco Sweden AB
(86) International application number: PCT/SE2016/050880
(87) International publication number: WO 2017/061925

(56) References cited:
- WO-A1-2015/037926
- SAMSUNG: "Some security aspects of dual connectivity", 3GPP DRAFT; R2-141603_SCE_SECURITY_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Valencia, Spain; 20140331 - 20140404 21 March 2014 (2014-03-21), XP050817589, Retrieved from the Internet: URL:http://www.3gpp.org/ftp/tsg_ran/WG2_RL 2/TSGR2_85bis/Docs/ [retrieved on 2014-03-21]
- HUAWEI: "Security at RRC Connection Re-establishment", 3GPP DRAFT; R2-084309, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20080812, 12 August 2008 (2008-08-12), XP050319389, [retrieved on 2008-08-12]

## Description

### Technical Field

This disclosure relates to a radio access node in a communication network and a method of operating the same, and in particular relates to a radio access node that supports a plurality of cells.

### Background

A trend in today's networks is for the operator to add more frequencies and reduce the size of cells to increase the capacity of mobile broadband. This leads to an increase in UE (User Equipment) reconfigurations and mobility actions. Examples of reconfigurations are when UEs are connected to multiple cells simultaneously, and the eNB (the node with which the UEs communicate over the air interface, and that controls a set of cells) may then enable and disable connectivity with the UE through the set of cells it controls.

The ability to quickly move or resume a UE session between cells becomes increasingly more important in order to fit the traffic patterns associated with short data bursts. A recent addition to the Long Term Evolution (LTE) standards is support for Multi Frequency Band Indicators (MFBI). MFBI has been introduced due to the fact that many LTE bands are partly or fully overlapping. MFBI provides the possibility that one cell can belong to multiple bands, even though it is only serving one physical frequency. Since the Evolved Absolute Radio Frequency Channel Number (EARFCN) of a cell is unique per band, this means that the EARFCN of the cell may differ, depending on which band the UE uses. MFBI has mainly been introduced to reduce the cost to the UEs. By only supporting a limited set of bands, the amount of conformance testing required can be significantly reduced.

The present disclosure relates to security when a UE connects to an eNB through one of a number of cells. In particular, the present disclosure relates to a problem during handover between cells that arises, for example, due to the way in which security of handovers in LTE is tied to the EARFCN. Outlines of security in LTE and handovers in LTE are presented below, however this disclosure should not be interpreted as only applying to LTE.

The communication between the UE and the eNB is encrypted and partially integrity protected. The integrity and encryption keys are derived from a common root key called the K_{eNB} which is shared between the UE and the eNB. The K_{eNB} can be said to be used to protect traffic, and this should be understood as meaning that the K_{eNB} is used to derive encryption and integrity keys that are used to encrypt and integrity protect traffic. Thus the integrity protection and encryption keys are derived from the K_{eNB} and an identifier for which integrity or encryption algorithm the key should be used with. The K_{eNB} is unique to the UE-eNB pair. That is, the same K_{eNB} is never used to protect the traffic between the UE and two different eNBs, and, likewise, the same K_{eNB} is not used to protect traffic between two different UEs and the network. The rationale behind this design is to prevent an attacker that has gained access to or knowledge of a K_{eNB} that is used between a UE and a first eNB to have any use for that K_{eNB} when attempting to break encryption or integrity on traffic between the UE and a physically different eNB.

To ensure that the K_{eNB} is unique per UE-eNB pair, K_{eNB} is changed during handover between two eNBs. For simplicity, K_{eNB} is actually changed on all intra-LTE handovers (e.g. handover between cells), even when the source eNB and target eNB is the same node.

The uniqueness of the UE-K_{eNB} pair during handover is achieved by the fact that the UE and source eNB derive a new K_{eNB} (denoted K_{eNB}*) from the current K_{eNB}, the Physical Cell Identifier (PCI) of the target primary cell (PCell) and the target physical cell downlink frequency. This is specified in clause 7.2.8 of 3GPP TS 33.401 "3GPP System Architecture Evolution (SAE); Security architecture", version 12.14.0 (2015-03).

More specifically, the input to the key derivation function (KDF) to derive K_{eNB}* is:
- FC = 0x13
- P0 = PCI (target PCI)
- L0 = length of PCI (i.e. 0x00 0x02)
- P1 = EARFCN-DL (target physical cell downlink frequency)
- L1 length of EARFCN-DL (i.e. 0x00 0x02)

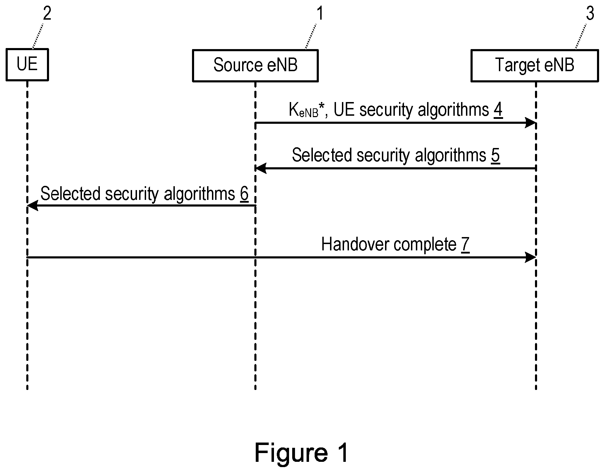

A handover between two eNBs without core network involvement, a so-called X2 handover, is described below with reference to Figure 1. Handovers can be performed after the UE has completed all necessary procedures to activate Radio Resource Control (RRC) and Non-Access Stratum (NAS) security. The X2 handover is initiated by the source eNB 1 calculating a K_{eNB}* key from the currently active K_{eNB}, shared between the source eNB 1 and the UE 2, and sending it together with the UE security capabilities to the target eNB 3 in a handover request message 4. The target eNB 3 replies with the required configuration information 5 for the UE connection. This information includes the chosen algorithms that the target eNB 3 and the UE 2 shall use. The source eNB 1 then forwards the reply to the UE 2 (signal 6), and the UE 2 confirms the handover with a completion message 7 to the target eNB 3. In the last step, the target eNB 3 retrieves a new key called the Next Hop key (NH) from a Mobility Management Entity (MME). The NH is derived from a key K_{ASME} (a base key that is shared by the UE and MME) and the NH is used as a basis for the calculation of K_{eNB}* in the next handover event.

Five problems that relate to the K_{eNB} being bound to the Physical Cell Identifier (PCI) and EARFCN-DL of the primary cell (PCell) are outlined below.

The first of the problems is the prevention of the ability to quickly move or resume a UE session between cells. This is becoming increasingly important in order to fit with traffic patterns associated with short data bursts. The traffic bursts may be sent from the UE to the eNB over one of many cells controlled by the eNB. However, since the encryption is tied to the primary cell (via the use of the EARFCN-DL of the primary cell and the PCI in the derivation of the key K_{eNB}), each time the UE reconnects in another cell a key renegotiation must be performed before traffic can resume. This is where the first problem lies: re-negotiation of the K_{eNB} consumes considerable processor cycles and memory, and it implies that the encryption key also is modified leading to some already ciphered packets having to be buffered, deciphered using the old encryption key and then re-ciphered using the new encryption key. This adds delay that reduces the end-user experience. Moreover, it complicates the implementation of the eNB, leading to increased risk for implementation errors and increased cost for code maintenance. It should be noted that even though no handover is performed, the EARFCN-DL may have changed due to the fact that the UE connects in a different PCell for the same eNB.

Secondly, as discussed above, MFBI provides the possibility that one cell can belong to multiple bands, even though it is only serving one physical frequency. Since the EARFCN of a cell is unique per band, this means that the EARFCN-DL of the cell may differ, depending on which band the UE uses. Consequently, if an eNB wants to enable and/or disable bearers on different frequencies an intra-eNB or intra-cell handover is required according to current standards, and hence the buffering and re-encryption issues remain.

Thirdly, the EARFCN-DL binding to K_{eNB} prevents multi-connectivity being used in a flexible way, e.g. switching freely between PCells without having to suspend all sessions and negotiate a new encryption key. Currently SCells can be reconfigured without suspending the user plane traffic, but when the PCell changes then all user plane traffic must be suspended (even for cells that have good connectivity).

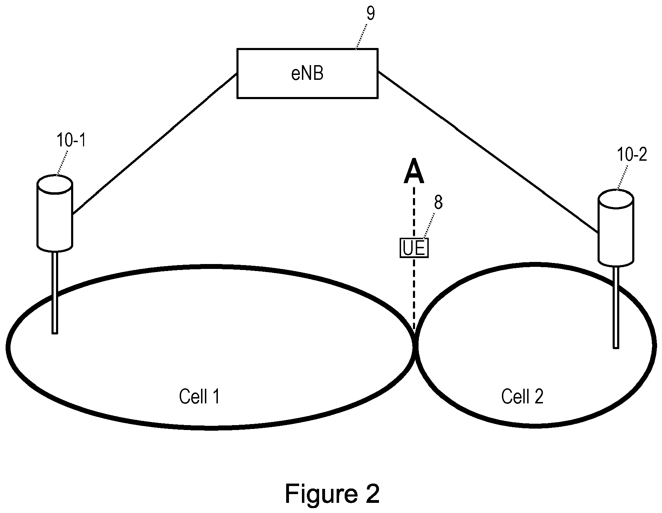

An example is shown in Figure 2 where a UE 8 and radio access network, RAN (represented by eNB 9) performs key renegotiation when the UE 8 moves between cell 1 (10-1) and cell 2 (10-2), e.g. when the UE 8 is at location A. The eNB 9 and UE 8 first suspend all radio bearers in the session, then any already-ciphered Packet Data Convergence Protocol (PDCP) packets that are not confirmed as received by the UE must be de-ciphered and re-ciphered using the new encryption key. Once reconfiguration is complete the data session can be resumed.

In existing LTE systems the simultaneous use of multiple carriers is allowed (which is known as carrier aggregation, CA, or multicarrier), but the PCI and EARFCN-DL binding does not cause a problem here. Multicarrier means that a UE can be connected to more than one cell at the same time and use the combined bandwidth to schedule the UE. The UE must have one primary cell but can have several secondary cells. The Physical cell ID of the PCell is used as the input parameter for the K_{eNB} generation, and the EARFCN-DL is taken from the frequency of the PCell as well.

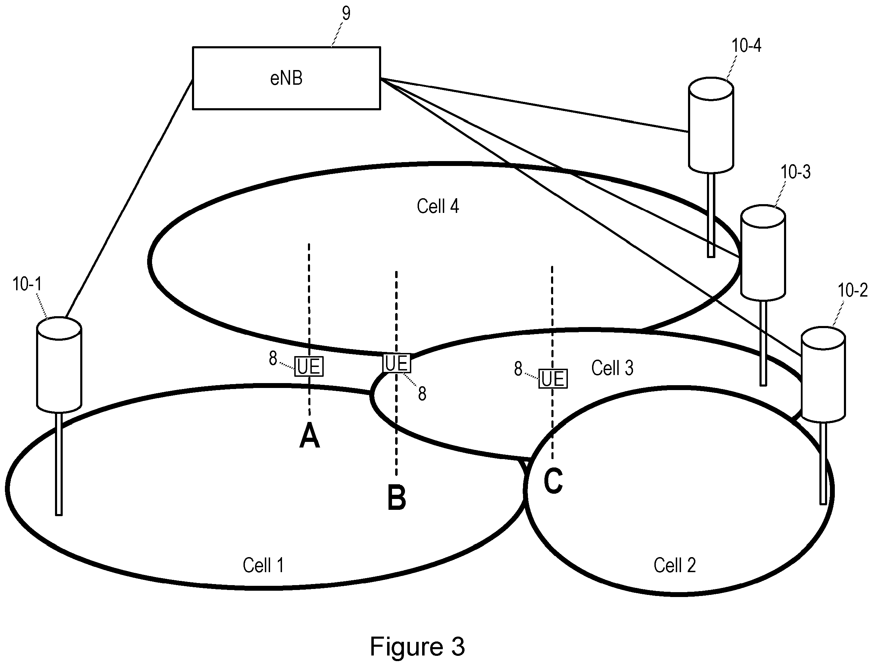

The fourth problem is illustrated with reference to Figure 3. Figure 3 shows an eNB 9 that is controlling four cells, 10-1, 10-2, 10-3 and 10-4. The Figure illustrates a handover-chain scenario with a UE 8 in three different locations, A, B and C where the binding of the K_{eNB} to the PCI and EARFCN-DL creates a highly inefficient process. At location A the UE 8 is connected to cell 1 (10-1) and 4 (10-4), at location B the UE 8 is connected to cell 1 (10-1), 3 (10-3) and 4 (10-4), and at location C the UE 8 is connected to cell 2 (10-2), 3 (10-3) and 4 (10-4).

During reconfiguration of a PCell all data sessions are suspended, regardless of cell quality or bandwidth, due to the K_{eNB} renegotiation. Depending on which cells are selected as the PCell for the UE 8, up to three different K_{eNB} renegotiations could occur when moving from point C to point A. During this time packets are buffered in the eNB 9, re-encrypted and sent out once the K_{eNB} renegotiation is complete. This adds delay to the ongoing data session.

The fifth problem is an additional problem that MFBI has introduced and results from the fact that carrier aggregation is only supported between a limited set of bands (also to reduce UE cost). Since the standard has defined that the UE should initially be configured with the EARFCN-DL of the primary band (if supported by the UE), it may prove that carrier aggregation between that band (of the PCell) and a potential SCell is not supported, but where one of the additional bands of the PCell can be combined with the potential SCell.

In order to provide the possibility of carrier aggregation, the EARFCN-DL of the PCell has to be changed. That is achieved by performing a procedure called intra-cell handover, and is the same mechanism that is used for key-change-on-the-fly to update the K_{eNB} and hence implicitly the encryption key. In terms of signalling this intra-cell handover looks like a handover, but no change of PCell has actually been made.

This, however, introduces the same problem as for normal handovers, where the data session has to be suspended during the intra-cell handover procedure and already ciphered data has to be de-ciphered and re-ciphered again, once the intra-cell handover is completed.

The five problems above are specific to the way security is handled in LTE, although some of the problems may also be evident in other types of communication networks. However, the need to optimise security processing is common to many different types of network.

Therefore there is a need for improvements in the way in which security is handled when a handover occurs between cells supported by the same eNB.

NEC corporation: "Security aspects for independent PDCP", 3GPP draft; R2-132675_security, 3rd generation partnership project (3GPP), mobile competence centre; 650, route des lucioles; F- 06921 sophia-antipolis cedex; France, vol. RAN WG2, no. Barcelona, Spain; 20130819-20130823 9 August 2013 (2013-08-09), XP050718276 discloses two types of security options for dual connectivity.

### Summary

The invention is defined by the independent claims. Furthermore, embodiments of the invention are defined by the claims. According to a first aspect, there is provided a method of operating a first radio access node in a communication network. The first radio access node supports a plurality of cells that are divided into one or more groups of cells, where at least a first group of cells comprises more than one cell. The method comprises determining a first base key for a communication device that is to connect to the first radio access node via a first cell in a first group of cells; wherein the first base key is determined from an identifier for the first group of cells; using the first base key to determine a first encryption key that is to be used to encrypt communications between the communication device and the first radio access node via the first cell; and in the event that the communication device is to connect to the first radio access node via a second cell in the first group of cells, using the first encryption key to encrypt communications between the communication device and the first radio access node via the second cell.

According to a second aspect, there is provided a first radio access node for use in a communication network. The first radio access node supports a plurality of cells that are divided into one or more groups of cells, where at least a first group of cells comprises more than one cell. The first radio access node is adapted or configured to (or comprises one or more modules configured to) determine a first base key for a communication device that is to connect to the first radio access node via a first cell in a first group of cells; wherein the first base key is determined from an identifier for the first group of cells; use the first base key to determine a first encryption key that is to be used to encrypt communications between the communication device and the first radio access node via the first cell; use the first encryption key to encrypt communications between the communication device and the first radio access node in the event that the communication device is to connect to the first radio access node via a second cell in the first group of cells.

According to a third aspect, there is provided a first radio access node for use in a communication network. The first radio access node comprises a processor and a memory, said memory containing instructions executable by said processor whereby said first radio access node is operative to perform the method according to the first aspect set out above.

According to a fourth aspect, there is provided a method of operating a communication device. The method comprises determining a first base key for a first cell in a first group of cells from an identifier for the first group of cells, the first group of cells being supported by a first radio access node; using the first base key to determine a first encryption key that is to be used to encrypt communications between the communication device and the first radio access node via the first cell; and, in the event that the communication device is to connect to a second cell in the first group of cells, using the first encryption key to encrypt communications between the communication device and the first radio access node via the second cell.

According to a fifth aspect, there is provided a communication device. The communication device is adapted or configured to (or comprises one or more modules configured to) determine a first base key for a first cell in a first group of cells from an identifier for the first group of cells, wherein the first group of cells are supported by a first radio access node; use the first base key to determine a first encryption key that is to be used to encrypt communications between the communication device and the first radio access node via the first cell; and use the first encryption key to encrypt communications between the communication device and the first radio access node in the event that the communication device is to connect to a second cell in the first group of cells.

According to a sixth aspect, there is provided a communication device. The communication device comprises a processor and a memory, said memory containing instructions executable by said processor whereby said communication device is operative to perform the method according to the fourth aspect set out above.

According to a seventh aspect, there is provided a method of operating a node in a communication network. The method comprises determining a first base key for use by a first radio access node and a communication device that is to connect to the first radio access node via a first cell in a first group of cells, wherein the first radio access node supports a plurality of cells that are divided into one or more groups of cells, where at least the first group of cells comprises more than one cell, and wherein the first base key is determined from an identifier for the first group of cells.

According to an eighth aspect, there is provided a node for use in a communication network. The node is adapted or configured to (or comprises one or more modules configured to) determine a first base key for use by a first radio access node and a communication device that is to connect to the first radio access node via a first cell in a first group of cells, wherein the first radio access node supports a plurality of cells that are divided into one or more groups of cells, where at least a first group of cells comprises more than one cell, and wherein the first base key is determined from an identifier for the first group of cells.

According to a ninth aspect, there is provided a node for use in a communication network. The node comprises a processor and a memory, said memory containing instructions executable by said processor whereby said node is operative to perform the method according to the seventh aspect set out above.

According to a tenth aspect, there is provided a computer program product comprising a non-transitory computer readable medium having computer readable code embodied therein. The computer readable code is configured such that, on execution by a suitable computer or processor, the computer or processor is caused to perform any of the method aspects set out above.

Particular embodiments may incorporate one or more of the aspects provided above and elements of certain aspects may be combined.

### Brief Description of the Drawings

Certain embodiments of the techniques introduced in this document are described below with reference to the following figures, in which:
Figure 1 illustrates the signalling in a handover between a source eNB and a target eNB in an LTE network;
Figure 2 illustrates a UE moving between two cells;
Figure 3 illustrates a UE moving between four cells;
Figure 4 is a non-limiting example block diagram of a LTE cellular communications network;
Figure 5 is a block diagram of a communication device according to an embodiment;
Figure 6 is a block diagram of a radio access node according to an embodiment;
Figure 7 is a block diagram of a core network node according to an embodiment;
Figure 8 illustrates an exemplary grouping of cells into security areas according to an embodiment;
Figure 9 is a flow chart illustrating a method of operating a radio access node according to an embodiment;
Figure 10 is a flow chart illustrating a method of operating a communication device according to an embodiment;
Figure 11 is a flow chart illustrating a method of operating a node according to an embodiment;
Figure 12 is a block diagram of a first radio access node according to another embodiment;
Figure 13 is a block diagram of a communication device according to another embodiment;
Figure 14 is a block diagram of a node according to another embodiment;
Figure 15 is a block diagram of a first radio access node according to yet another embodiment;
Figure 16 is a block diagram of a communication device according to yet another embodiment; and
Figure 17 is a block diagram of a node according to yet another embodiment.

### Detailed Description

The following sets forth specific details, such as particular embodiments for purposes of explanation and not limitation. But it will be appreciated by one skilled in the art that other embodiments may be employed apart from these specific details. In some instances, detailed descriptions of well-known methods, nodes, interfaces, circuits, and devices are omitted so as not obscure the description with unnecessary detail. Those skilled in the art will appreciate that the functions described may be implemented in one or more nodes using hardware circuitry (e.g., analog and/or discrete logic gates interconnected to perform a specialized function, ASICs, PLAs, etc.) and/or using software programs and data in conjunction with one or more digital microprocessors or general purpose computers. Nodes that communicate using the air interface also have suitable radio communications circuitry. Moreover, where appropriate the technology can additionally be considered to be embodied entirely within any form of computer-readable memory, such as solid-state memory, magnetic disk, or optical disk containing an appropriate set of computer instructions that would cause a processor to carry out the techniques described herein.

Hardware implementation may include or encompass, without limitation, digital signal processor (DSP) hardware, a reduced instruction set processor, hardware (e.g., digital or analog) circuitry including but not limited to application specific integrated circuit(s) (ASIC) and/or field programmable gate array(s) (FPGA(s)), and (where appropriate) state machines capable of performing such functions.

In terms of computer implementation, a computer is generally understood to comprise one or more processors, one or more processing units, one or more processing modules or one or more controllers, and the terms computer, processor, processing unit, processing module and controller may be employed interchangeably. When provided by a computer, processor, processing unit, processing module or controller, the functions may be provided by a single dedicated computer, processor, processing unit, processing module or controller, by a single shared computer, processor, processing unit, processing module or controller, or by a plurality of individual computers, processors, processing units, processing modules or controllers, some of which may be shared or distributed. Moreover, these terms also refer to other hardware capable of performing such functions and/or executing software, such as the example hardware recited above.

Although in the description below the term user equipment (UE) is used, it should be understood by the skilled in the art that "UE" is a non-limiting term comprising any mobile device, communication device, wireless communication device, terminal device or node equipped with a radio interface allowing for at least one of: transmitting signals in uplink (UL) and receiving and/or measuring signals in downlink (DL). A UE herein may comprise a UE (in its general sense) capable of operating or at least performing measurements in one or more frequencies, carrier frequencies, component carriers or frequency bands. It may be a "UE" operating in single- or multi-radio access technology (RAT) or multi-standard mode. As well as "UE", the general terms "terminal device", "communication device" and "wireless communication device" are used in the following description, and it will be appreciated that such a device may or may not be 'mobile' in the sense that it is carried by a user. Instead, the term "terminal device" (and the alternative general terms set out above) encompasses any device that is capable of communicating with communication networks that operate according to one or more mobile communication standards, such as the Global System for Mobile communications, GSM, UMTS, Long-Term Evolution, LTE, etc. A UE may comprise a Universal Subscription Identity Module (USIM) on a smart-card or implemented directly in the UE, e.g., as software or as an integrated circuit. The operations described herein may be partly or fully implemented in the USIM or outside of the USIM.

One or more cells are associated with a base station, where a base station comprises in a general sense any network node transmitting radio signals in the downlink and/or receiving radio signals in the uplink. Some example base stations, or terms used for describing base stations, are eNodeB, eNB, NodeB, macro/micro/pico/femto radio base station, home eNodeB (also known as femto base station), relay, repeater, sensor, transmitting-only radio nodes or receiving-only radio nodes. A base station may operate or at least perform measurements in one or more frequencies, carrier frequencies or frequency bands and may be capable of carrier aggregation. It may also be a single-radio access technology (RAT), multi-RAT, or multi-standard node, e.g., using the same or different base band modules for different RATs.

Unless otherwise indicated herein, the signalling described is either via direct links or logical links (e.g. via higher layer protocols and/or via one or more network nodes).

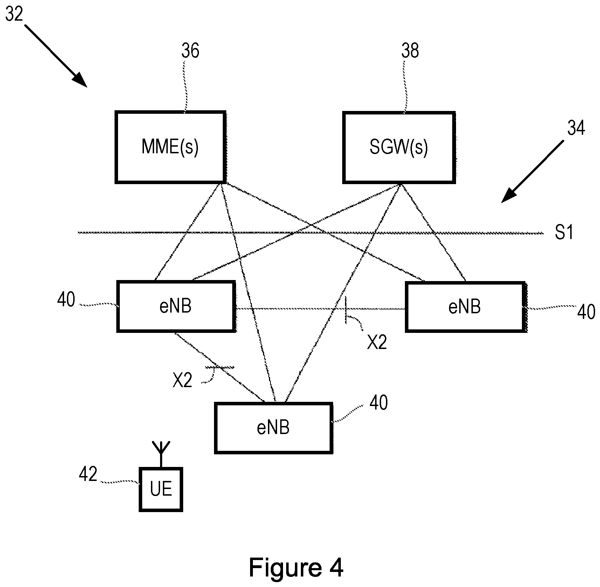

Figure 4 shows an example diagram of an evolved Universal Mobile Telecommunications System (UMTS) Terrestrial Radio Access Network (E-UTRAN) architecture as part of an LTE-based communications system 32 to which the techniques described herein can be applied. Nodes in a core network 34 part of the system 32 include one or more Mobility Management Entities (MMEs) 36, a key control node for the LTE access network, and one or more Serving Gateways (SGWs) 38 which route and forward user data packets while acting as a mobility anchor. They communicate with base stations or radio access nodes 40 referred to in LTE as eNBs, over an interface, for example an S1 interface. The eNBs 40 can include the same or different categories of eNBs, e.g. macro eNBs, and/or micro/pico/femto eNBs. The eNBs 40 communicate with each other over an inter-node interface, for example an X2 interface. The S1 interface and X2 interface are defined in the LTE standard. A UE 42 is shown, and a UE 42 can receive downlink data from and send uplink data to one of the base stations 40, with that base station 40 being referred to as the serving base station of the UE 42.

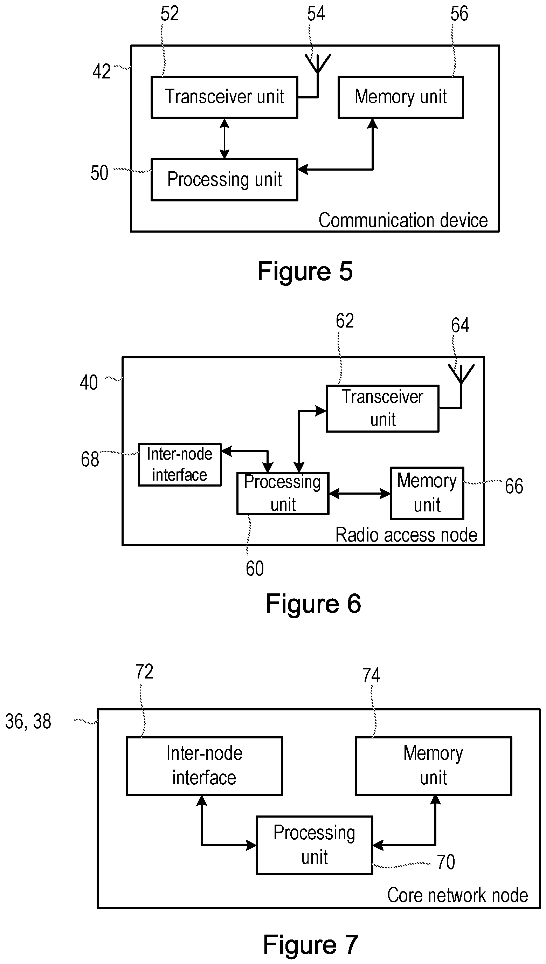

Figure 5 shows a communication device/terminal device (UE) 42 that can be adapted or configured to operate according to one or more of the non-limiting example embodiments described. The UE 42 comprises a processor or processing unit 50 that controls the operation of the UE 42. The processing unit 50 is connected to a transceiver unit 52 (which comprises a receiver and a transmitter) with associated antenna(s) 54 which are used to transmit signals to and receive signals from a radio access node 40 in the network 32. The UE 42 also comprises a memory or memory unit 56 that is connected to the processing unit 50 and that contains instructions or computer code executable by the processing unit 50 and other information or data required for the operation of the UE 42.

Figure 6 shows a radio access node (for example a cellular network base station such as a NodeB or an eNodeB, eNB) that can be adapted or configured to operate according to the example embodiments described. The radio access node 40 comprises a processor or processing unit 60 that controls the operation of the radio access node 40. The processing unit 60 is connected to a transceiver unit 62 (which comprises a receiver and a transmitter) with associated antenna(s) 64 which are used to transmit signals to, and receive signals from, UEs 42 in the network 32. The radio access node 40 also comprises a memory or memory unit 66 that is connected to the processing unit 60 and that contains instructions or computer code executable by the processing unit 60 and other information or data required for the operation of the radio access node 40. The radio access node 40 also includes components and/or circuitry 68 for allowing the radio access node 40 to exchange information with another radio access node 40 (for example via an X2 interface), and/or with a core network node 36, 38 (for example via an S1 interface). It will be appreciated that base stations for use in other types of network (e.g. UTRAN or WCDMA RAN) will include similar components to those shown in Figure 6 and appropriate interface circuitry 68 for enabling communications with the other radio access nodes in those types of networks (e.g. other base stations, mobility management nodes and/or nodes in the core network). It will be appreciated that a radio access node 40 can be implemented as a number of distributed functions in the radio access network (RAN).

Figure 7 shows a core network node 36, 38 that can be used in the example embodiments described. The node 36, 38 could be an MME 36, an SGW 38, or another type of core network node (e.g. a radio network controller, RNC). The node 36, 38 comprises a processing unit 70 that controls the operation of the node 36, 38. The processing unit 70 is connected to interface components and/or circuitry 72 for allowing the node 36, 38 to exchange information with network nodes in the radio access network (RAN), for example radio access nodes 40, which it is associated (which is typically via the S1 interface) and/or with other nodes in the core network part of the network. The node 36, 38 also comprises a memory unit 74 that is connected to the processing unit 70 and that stores program and other information and data required for the operation of the node 36, 38.

It will be appreciated that only the components of the UE 42, radio access node 40 and core network node 36, 38 discussed in the context of the embodiments presented herein are illustrated in Figures 5, 6 and 7.

Although the embodiments of the present disclosure will mainly be described in the context of LTE, it will be appreciated by those skilled in the art that the problems and solutions described herein are equally applicable to other types of wireless access networks and user equipments (UEs) implementing other access technologies and standards, and thus LTE (and the other LTE specific terminology used herein) should only be seen as examples of the technologies to which the techniques can be applied.

As noted above, there are several problems with the current handling of security in an LTE communication network, particularly relating to handling of security during the handover procedure between cells supported by the same radio base station (eNB). The techniques provided below therefore provide improvements in the way in which security is handled when a handover occurs between cells supported by the same eNB. In particular the techniques described herein provide a simple and fast way to allow a UE to enable and disable connectivity to an eNB through multiple cells (including PCells) that may have different EARFCN-DL, without having to reconfigure the encryption too frequently, for example in a deployment scenario where PDCP is centralized or when several eNBs are allocated in the same hardware equipment. Currently such an action requires re-keying and hence causes significant processing delays and the need to storage packets in a buffer.

As part of the techniques described herein, for an eNB that supports a plurality of cells, the cells are grouped into one or more groups. These groups are referred to herein as "security areas", although this name should not be seen as limiting. Each group can comprise more than one cell, and it is possible for all of the cells of an eNB to be in the same group. At least a first group of cells comprises more than one cell, and in some embodiments, each group comprises at least two cells. Each of the security areas (groups) is given a respective identifier that is referred to herein as a "security area identifier". Thus, a "security area identifier" may be shared by two or more physical cells or beams.

The particular cells that belong to the same security area may be determined, e.g., based on whether the encryption of the traffic for the collection of cells is performed within the same secure environment. For example, an eNB may have a distributed architecture, where the encryption is performed in physically different hardware, and the main gain of changing K_{eNB} at a handover is, as pointed out above, to protect keys that are used in different physical eNBs (or physically different entities performing the functions of a distributed eNB implementation).

Within a security area, the techniques described herein provide that an Access Stratum (AS)-base key, for example K_{eNB} and encryption keys derived from it, for a particular communication device/terminal device (UE) can be reused by the UE in each of the cells of the security area (group). Put another way, the eNB 40, within a given security area, uses the same K_{eNB}, and encryption key derived from it, for a specific UE (and likewise the UE uses the same K_{eNB}, and encryption keys derived from it, for the different cells in the security area). It will be appreciated that if the same integrity or encryption algorithm is used and the K_{eNB} remains the same, then the encryption key and integrity key will also remain the same. This reuse of the keys enables the UE to move (e.g., handover) between cells in a group without the eNB 40 or UE 42 having to reconfigure the AS-base key, K_{eNB}, or an associated encryption key, and hence the eNB can seamlessly activate and deactivate cells for a UE inside the security area in a very fast and flexible way. If the UE moves (e.g., hands-over) to a cell that is in a different security area (e.g. a cell of the same eNB that is in a different group, or a cell that is supported by a different eNB), then a new AS-base key (denoted K_{eNB}*) is derived by the relevant eNB 40 and the UE 42, along with a new encryption key, for use by the UE in that other security area. It will be appreciated that the UE and the eNB may share more than one K_{eNB} at any given time.

The following description indicates how to keep the K_{eNB} the same at different events relating to cell-change, and it will be understood by those skilled in the art that keeping the K_{eNB} the same will mean that the encryption key and integrity key will also remain the same provided that the same encryption/integrity protection algorithms are used.

It will be appreciated that with the above techniques the UE can reconnect to any cell within a particular security area and resume the current configuration, which comprises continuing to use the same K_{eNB} and encryption key. This reduces the setup delay considerably, thereby improving the end user experience and performance.

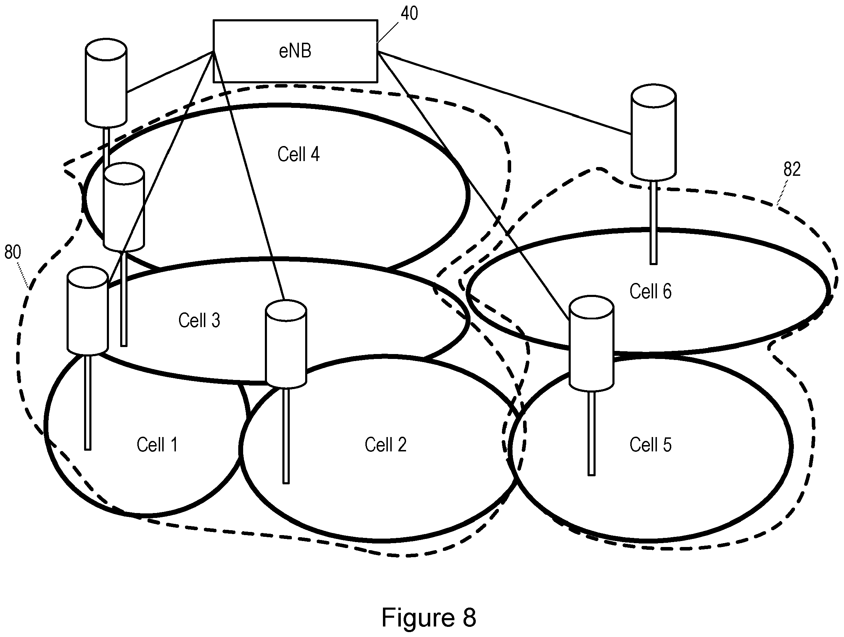

An exemplary grouping of cells into two groups for an eNB 40 is shown in Figure 8. In Figure 8, the eNB 40 has six cells, labelled Cell 1 to Cell 6. In this example, Cells 1-4 are grouped into one security area 80, and Cells 5 and 6 are grouped into a second security area 82.

It will be appreciated that although Cells 1-6 are shown as generally covering a respective geographical area, it is possible that two or more of the cells could substantially spatially overlap (for example if they use different frequencies).

The eNB 40 can inform the UE about which security area a certain cell belongs to, and the identifier for the security area. This information can be communicated to the UE in one of a number of ways, for example in system control information (e.g., in a System Information Block, SIB) or in dedicated UE signalling (e.g., Radio Resource Control (RRC), Radio Link Control (RLC), or Medium Access Control (MAC) signalling).

In some embodiments, the security configuration is, for all practical purposes, made distinct to the security area by making the AS-base key dependent on the security area itself. In particular, the AS-base key can be made dependent on the security area by deriving the AS-base key using the security area identifier as an input to the key-generation function. The AS-base key can be generated from different types of existing key material. For example, it can be generated from a previous AS-base key (e.g., a K_{eNB}, and the new AS-base key would then correspond to the K_{eNB}*). It could also be generated from an NH value or K_{ASME}, as described above. The AS-base key can be derived from such previous keys using a Key Derivation Function (KDF), for example, HMAC-SHA256.

In conventional LTE, an eNB may prepare a number of potential target cells for handover. During the preparation, the eNB will provide the potential target cells with keying material to be used with the UE in case the UE is handed over to that particular target cell. To avoid an eNB of a potential target cell that is not selected for handover getting the keying material (e.g. K_{eNB}*) that is used between the actual target cell and the UE, the source eNB individually calculates the keying material for each potential target cell. Specifically, the source eNB includes the PCI and EARFCN-DL for the target cell in the key material calculation.

In contrast, by using the security area identifier in the derivation of the AS-base key, the result is that two or more prepared target cells that belong to different security areas will get different K_{eNB}*s. This ensures that if an attacker that gets hold of the K_{eNB}* of one of the prepared target cells, this will not jeopardise the security of the K_{eNB}*s of the other prepared target cells.

It is noted that this does not make the security model weaker. Even though there is a handover between two cells (within a security area), they are both controlled by the same eNB and hence an attacker that breaks into that eNB would, in the current security model in LTE, get the single K_{eNB} used for both cells. With the techniques described herein, the attacker would get both keys.

An example of generating a K_{eNB}* according to the above principle in the context of LTE is: AS-base key = KDF(K_{eNB}, S), where KDF is as defined in 3GPP TS 33.401 referenced above, K_{eNB} is the currently active K_{eNB}, and S is the set of parameters FC, P0, L0 encoded as defined in 3GPP TS 33.401, where FC is a functional code, P0 is an encoding of the security area identifier and L0 is the length of the encoding of the security area identifier in octets. It will be appreciated by those skilled in the art that other parameters can be included in the key derivation function call. Other derivation functions are also possible. The security area identifier may be encoded as an integer, a bit-string, an ASCII string or other representation. The important part is that the same security area identifier is not used for two security areas that can be simultaneously prepared for handover of a UE, as described above.

The security area identifier is used to generate the AS-base key instead of a cell identity (e.g. the PCI) and frequency (e.g. the EARFCN-DL). By generating the AS-base key without using the PCI and EARFCN-DL of the PCell, the base key is not forced to be updated for each change in the PCell. It will be appreciated that in some embodiments the security area identifier might not be the only input to the AS-base key generation function, and it is possible for the AS-base key to be derived using other parameters in addition to the security area identifier.

The eNB 40 may establish a connection to the UE via one or more cells and release these connections using the same K_{eNB} (or at least the same encryption key) each time.

As noted above, an eNB 40 can be understood (and implemented) as a number of distributed functions, and the location of the security handling (i.e. PDCP and RRC) in the radio access network can decide how big the security areas can be without breaking any security principles.

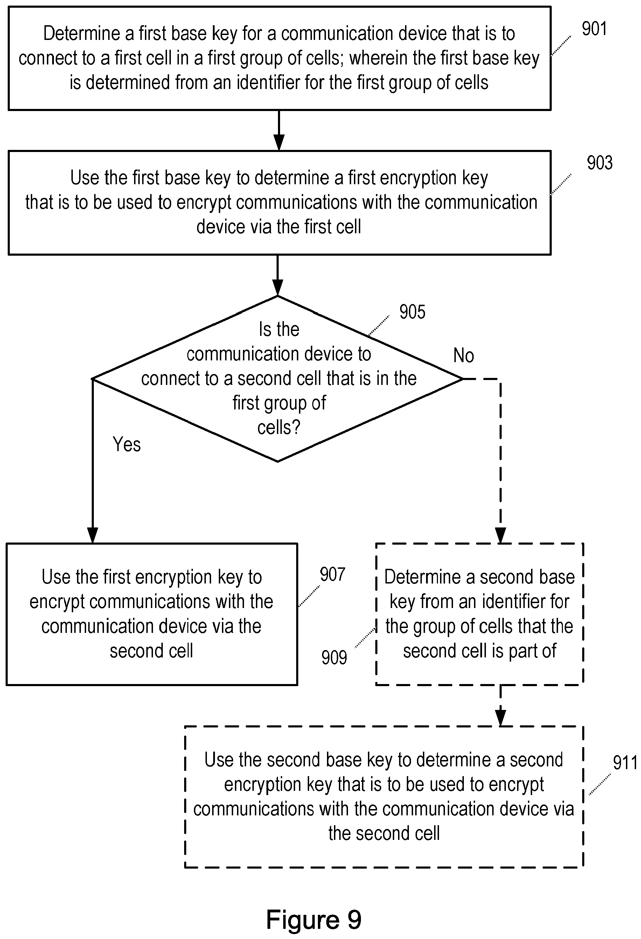

An exemplary method of operating a radio access node (e.g. an eNB in an LTE network) 40 according to the techniques described herein is shown in Figure 9. The radio access node 40 (which is also referred to as the first radio access node below) supports a plurality of cells that are divided into one or more groups of cells. Each group may comprise more than one cell, with at least a first group of cells comprising more than one cell and each group has a respective identifier.

In a first step, step 901, the first radio access node 40 determines a first base key, referred to as a first AS-base key (e.g. a K_{eNB}) below for a communication device 42 that is to connect to the first radio access node 40 via a first cell in the first group of cells (e.g. via Cell 1 in security area 80 in Figure 8). In particular embodiments the first AS-base key is determined from an identifier for the first group of cells (i.e. the security area identifier described above). In these or further embodiments, the first AS-base key is determined without using an identifier that is unique to the first cell (e.g. a PCI) and/or an identifier of the frequency to be used in the first cell (e.g. an EARFCN-DL).

Next, in step 903, the first radio access node 40 uses the first AS-base key to determine a first encryption key that is to be used to encrypt communications between the communication device 42 and the first radio access node 40 via the first cell. The first encryption key can be used to encrypt communications, e.g. user plane data or control plane data, between the communication device 42 and the radio access node 40. It will be appreciated that respective encryption keys can be derived from the first AS-base key for encrypting each of user plane data and control plane data.

In step 905, which can be performed during a handover procedure to a second cell, it is determined whether the second cell that is in the first group of cells (e.g. one of Cells 2-4 in security area 80 in Figure 8).

If it is determined that the communication device 42 is to connect to a second cell that is in the first group of cells, then rather than determine a new base key (e.g. K_{eNB}*) and hence also a new encryption key as in a conventional system, the radio access node 40 uses the first encryption key to encrypt communications between the communication device 42 and the radio access node 40 via the second cell (step 907).

However, if at step 905 it is determined that the communication device 42 is to connect to a second cell that is not in the first group of cells then the first radio access node 40 (that is supporting the first cell) determines a second (AS-)base key for the communication device 42 for use with the second cell (step 909). In particular, the first radio access node 40 can determine the second base key from an identifier for the group of cells that the second cell is part of (e.g. from the identifier for security area 82 in Figure 8 if the second cell is Cell 5 or Cell 6) and the first AS-base key. It will be appreciated that in this case the second cell could be a cell in security area 82 in Figure 8 (i.e. a cell that also is supported by the first radio access node), or the second cell could be a cell that is supported by a different (second) radio access node.

Although not shown in Figure 9, just before or after step 909, the first radio access node 40 can determine whether the second cell is a cell that is supported by the first radio access node.

If the first radio access node 40 supports both the first cell and the second cell, then after step 909 the radio access node 40 uses the second base key to determine a second encryption key that is to be used to encrypt communications between the communication device 42 and the first radio access node 40 via the second cell (step 911).

If the second cell is supported by a second radio access node, the second base key determined in step 909 is sent by the first radio access node to the second radio access node (i.e. step 911 as shown in Figure 9 is not performed in this case). The second radio access node then uses the received second base key to determine a second encryption key that is to be used to encrypt communications between the communication device 42 and the second radio access node via the second cell.

In some embodiments, the first radio access node can send an indication of the identifier for the first group of cells to the communication device 42 (so that the communication device 42 can also determine the first base key).

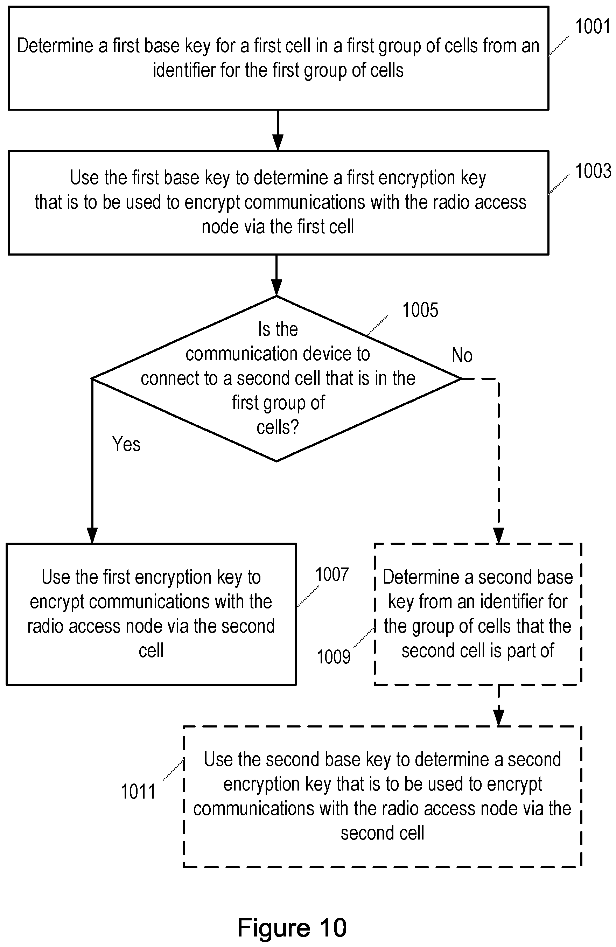

Figure 10 illustrates a method of operating a communication device (e.g. a UE) 42 according to the techniques presented herein. The communication device 42 is being served by a first radio access node 40 (e.g. an eNB) that supports a plurality of cells that are divided into one or more groups of cells. Each group may comprise more than one cell, with at least a first group of cells comprising more than one cell, and each group has a respective identifier.

When the communication device 42 connects to the first radio access node via a first cell (e.g. Cell 1 in security area 80 in Figure 8) in the first group of cells, the communication device 42 determines a first base key, referred to as a first AS-base key (e.g. K_{eNB}) below for the first cell (step 1001). In particular embodiments the first base key is determined from an identifier for the first group of cells (i.e. the security area identifier described above). In these or further embodiments, the first AS-base key is determined without using an identifier that is unique to the first cell (e.g. a PCI) and/or an identifier of the frequency to be used in the first cell (e.g. an EARFCN-DL).

Next, in step 1003, the communication device 42 uses the first AS-base key to determine a first encryption key that is to be used to encrypt communications between the communication device 42 and the first radio access node 40 via the first cell. The first encryption key can be used to encrypt communications, e.g. user plane data or control plane data, between the communication device 42 and the first radio access node 40 via the first cell. It will be appreciated that respective encryption keys can be derived from the first AS-base key for encrypting each of user plane data and control plane data.

In step 1005, which can be performed during a handover procedure to a second cell, it is determined whether the second cell is in the first group of cells (e.g. one of Cells 2-4 in security area 80 in Figure 8).

If it is determined that the communication device 42 is to connect to a second cell that is in the first group of cells, then rather than determine a new AS-base key (e.g. K_{eNB}*) and hence also a new encryption key as in a conventional system, the communication device 42 uses the first encryption key to encrypt communications between the communication device 42 and the first radio access node 40 via the second cell (step 1007).

However, if at step 1005 it is determined that the communication device 42 is to connect to a second cell that is not in the first group of cells, then the communication device 42 determines a second AS-base key to use with that cell (step 1009). In particular, the communication device 42 can determine the second AS-base key from an identifier for the group of cells that the second cell is part of (e.g. from the identifier for security area 82 in Figure 8 if the second cell is Cell 5 or Cell 6) and the first AS-base key. It will be appreciated that in this case the second cell could be a cell in security area 82 in Figure 8 (i.e. a cell that also is supported by the first radio access node), or the second cell could be a cell that is supported by a different (second) radio access node.

The communication device 42 then uses the second AS-base key to determine a second encryption key that is to be used to encrypt communications via the second cell (step 1011). This second encryption key can then be used to encrypt communications via the second cell.

In some embodiments the communication device 42 can receive an indication of the identifier for the first group of cells from the first radio access node 40. In alternative embodiments, the communication device 42 can receive an indication of the identifier for the first group of cells from a node other than the first radio access node 40.

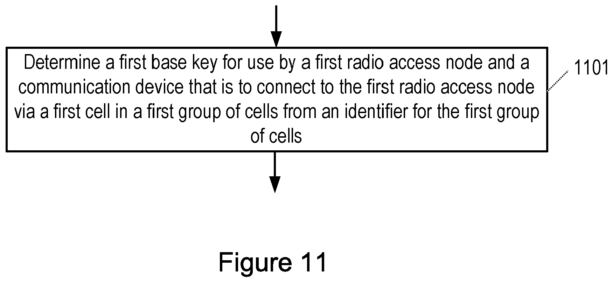

An exemplary method of operating a network node according to another embodiment of the techniques described herein is shown in Figure 11. This method relates to the operation of a node that is responsible for generating the base key from the security area identifier (if not the radio access node that is supporting the first cell that the communication device 42 is to communicate via), and thus could be a node in the core network part of the communication network (and for example the node could be an MME 36), or a node in the RAN of the communication network (e.g. an eNB 40, or a function or component that is part of a distributed eNB architecture).

Thus, in step 1101, for a communication device 42 that is to connect to a first radio access node 40 via a first cell in a group of cells supported by the first radio access node 40, the network node determines a first base key for use by the first radio access node and the communication device. The first base key is determined from an identifier for the first group of cells. The base key is to be used for determining an encryption key that is to be used to encrypt communications between the communication device and the first radio access node via the first cell.

Although not shown in Figure 11, the network node can send the first base key to the first radio access node via an inter-node interface (e.g. inter-node interface 68 or inter-node interface 72).

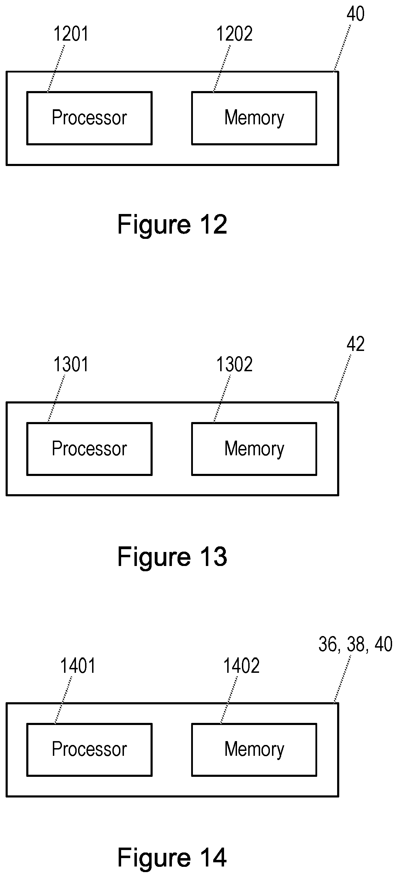

Figure 12 is a block diagram of a first radio access node 40 according to another embodiment. The first radio access node 40 is for use in a communication network 32, and supports a plurality of cells that are divided into one or more groups 80, 82 of cells, wherein at least a first group 80, 82 of cells comprises more than one cell. The first radio access node 40 comprises a processor 1201 and a memory 1202. The memory 1202 contains instructions executable by the processor 1201 such that the first radio access node 40 is operative to determine a first base key for a communication device 42 that is to connect to the first radio access node 40 via a first cell in the first group of cells, where the first base key is determined from an identifier for the first group of cells; use the first base key to determine a first encryption key that is to be used to encrypt communications between the communication device 42 and the first radio access node 40 via the first cell; and use the first encryption key to encrypt communications between the communication device 42 and the first radio access node 40 in the event that the communication device 42 is to connect to the first radio access node 40 via a second cell in the first group of cells.

Figure 13 is a block diagram of a communication device 42 according to another embodiment. The communication device 42 comprises a processor 1301 and a memory 1302. The memory 1302 contains instructions executable by the processor 1301 whereby the communication device 42 is operative to determine a first base key for a first cell in a first group of cells from an identifier for the first group of cells, where the first group of cells are supported by a first radio access node 40; use the first base key to determine a first encryption key that is to be used to encrypt communications between the communication device 42 and the first radio access node 40 via the first cell; and use the first encryption key to encrypt communications between the communication device 42 and the first radio access node 40 in the event that the communication device 42 is to connect to a second cell in the first group of cells.

Figure 14 is a block diagram of a node according to another embodiment. This node could be a node in the core network part of the communication network (and for example the node could be an MME 36), or a node in the RAN of the communication network (e.g. an eNB 40, or a function or component that is part of a distributed eNB architecture). The node 40 is for use in a communication network 32 and comprises a processor 1401 and a memory 1402. The memory 1402 contains instructions executable by the processor 1401 such that the node is operative to determine a first base key for use by a first radio access node 40 and a communication device 42 that is to connect to the first radio access node 40 via a first cell in a first group of cells, where the first radio access node 40 supports a plurality of cells that are divided into one or more groups of cells, with at least the first group of cells comprising more than one cell, and where the first base key is determined from an identifier for the first group of cells.

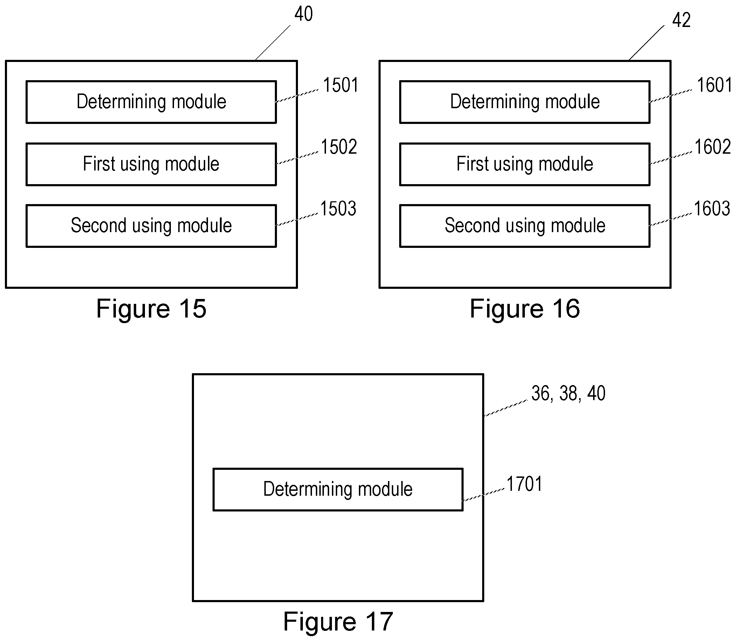

Figure 15 is a block diagram of a first radio access node 40 according to yet another embodiment. The first radio access node 40 is for use in a communication network 32, and supports a plurality of cells that are divided into one or more groups 80, 82 of cells, wherein at least a first group 80, 82 of cells comprises more than one cell. The first radio access node 40 comprises a determining module 1501 configured to determine a first base key for a communication device 42 that is to connect to the first radio access node 40 via a first cell in the first group of cells, where the first base key is determined from an identifier for the first group of cells; a first using module 1502 configured to use the first base key to determine a first encryption key that is to be used to encrypt communications between the communication device 42 and the first radio access node 40 via the first cell; and a second using module 1503 configured to use the first encryption key to encrypt communications between the communication device 42 and the first radio access node 40 in the event that the communication device 42 is to connect to the first radio access node 40 via a second cell in the first group of cells.

Figure 16 is a block diagram of a communication device 42 according to yet another embodiment. The communication device 42 comprises a determining module 1601 configured to determine a first base key for a first cell in a first group of cells from an identifier for the first group of cells, where the first group of cells are supported by a first radio access node 40; a first using module 1602 configured to use the first base key to determine a first encryption key that is to be used to encrypt communications between the communication device 42 and the first radio access node 40 via the first cell; and a second using module 1603 configured to use the first encryption key to encrypt communications between the communication device 42 and the first radio access node 40 in the event that the communication device 42 is to connect to a second cell in the first group of cells.

Figure 17 is a block diagram of a node according to yet another embodiment. This node could be a node in the core network part of the communication network (and for example the node could be an MME 36), or a node in the RAN of the communication network (e.g. an eNB 40, or a function or component that is part of a distributed eNB architecture). The node 40 is for use in a communication network 32 and comprises a determining module 1701 configured to determine a first base key for use by a first radio access node 40 and a communication device 42 that is to connect to the first radio access node 40 via a first cell in a first group of cells, where the first radio access node 40 supports a plurality of cells that are divided into one or more groups of cells, with at least the first group of cells comprising more than one cell, and where the first base key is determined from an identifier for the first group of cells.

Embodiments of the techniques described herein can provide a number of advantages. For example the techniques can provide the ability to combine several cells into a secure area within which the UE can securely move, switch or reconnect between the cells with minimum delay and low signalling cost. The techniques can also improve PDCP performance at packet forwarding (reduces processor requirements and buffering) since the same encryption key is used in the target and source cells. The techniques enable multi-connectivity in a more flexible way (UE and eNB can swap between PCell and SCell without key reconfiguration). MFBI can be enhanced, where the EARFCN-DL of the PCell can be changed without requiring key reconfiguration. It is possible to reconnect fast even if the PCell is not the same as before. Support for centralised PDCP nodes can be improved since no re-keying is required at intra security area handover. The need to stall and synchronise component carriers other than the one that is actually being reconfigured is removed (this improves multi-connectivity handover where each component carrier could be configured individually). The techniques enable the possibility of using the already configured encryption in UE to send small data packets without having to go from IDLE to CONNECTED mode, still with the same level of security as CONNECTED. The network can be configured during cell planning so that the K_{eNB} is only changed when the risk level is too high. For example, there is no need to change the K_{eNB} for security purposes when performing a handover between two cells belonging to the same physical eNB. The techniques enable a simpler architecture that allows for a better split of user and control plane. Overall the techniques simplify key handling for the UE and RAN and reduces core network signalling at reconnect within the same security area.

Modifications and other variants of the described embodiment(s) will come to mind to one skilled in the art having the benefit of the teachings presented in the foregoing descriptions and the associated drawings. Therefore, it is to be understood that the embodiment(s) is/are not to be limited to the specific examples disclosed and that modifications and other variants are intended to be included within the scope of this disclosure. Although specific terms may be employed herein, they are used in a generic and descriptive sense only and not for purposes of limitation.

## Claims

1. A method of operating a first radio access node in a communication network, the first radio access node supporting a plurality of cells that are divided into one or more groups of cells, wherein at least a first group of cells comprises more than one cell, the method comprising:
determining (901) a first access stratum, AS,- base key for a communication device that is to connect to the first radio access node via a first cell in the first group of cells; wherein the first AS-base key is determined using a security area identifier of the first group of cells without a physical cell identifier, PCI, and target physical cell downlink frequency, EARFCN-DL of the first cell;
using (903) the first AS-base key to determine a first encryption key that is to be used to encrypt communications between the communication device and the first radio access node via the first cell; and
in the event that the communication device is to connect to the first radio access node via a second cell in the first group of cells, using (907) the first encryption key to encrypt communications between the communication device and the first radio access node via the second cell.

2. A method as defined in claim 1, wherein the method further comprises the step of:
determining (905) whether the communication device is to connect to a second cell in the first group of cells;
and wherein the step of using (907) the first encryption key is performed if it is determined that the second cell is in the first group of cells.

3. A method as defined in claim 2, wherein if it is determined that the communication device is to connect to a second cell that is not in the first group of cells, the method further comprises the steps of:
determining (909) a second access stratum, AS,-base key for the communication device using a security area identifier of the group of cells that the second cell is part of, wherein the second AS-base key is determined without using the PCI and EARFCN-DL of the second cell.

4. A method as defined in claim 3, wherein the method further comprises the steps of:
determining whether the second cell is a cell that is supported by the first radio access node;
if the second cell is a cell that is supported by the first radio access node, using (911) the second AS-base key to determine a second encryption key that is to be used to encrypt communications between the communication device and the first radio access node via the second cell, and using the second encryption key to encrypt communications between the communication device and the first radio access node via the second cell; and
if the second cell is a cell that is not supported by the first radio access node, sending the second AS-base key to the radio access node that is supporting the second cell.

5. A method as defined in any of claims 1-4, wherein the method further comprises the step of:
sending an indication of the security area identifier of the first group of cells to the communication device.

6. A method of operating a communication device, the method comprising:
determining (1001) a first access stratum, AS,-base key for a first cell in a first group of cells using a security area identifier of the first group of cells without a physical cell identifier, PCI, and target physical cell downlink frequency, EARFCN-DL of the first cell, wherein the first group of cells being supported by a first radio access node;
using (1003) the first AS-base key to determine a first encryption key that is to be used to encrypt communications between the communication device and the first radio access node via the first cell; and
in the event that the communication device is to connect to a second cell in the first group of cells, using (1007) the first encryption key to encrypt communications between the communication device and the first radio access node via the second cell.

7. A method as defined in claim 6, wherein the method further comprises the step of:
determining (1005) whether the communication device is to connect to a second cell in the first group of cells;
and wherein the step of using (1007) the first encryption key is performed if it is determined that the second cell is in the first group of cells.

8. A method as defined in claim 7 wherein if it is determined that the communication device is to connect to a second cell that is not in the first group of cells, the method further comprises the steps of:
determining (1009) a second access stratum, AS,-base key using a security area identifier of the group of cells that the second cell is part of, wherein the second AS-base key is determined without using the PCI and EARFCN-DL of the second cell;
using (1011) the second AS-base key to determine a second encryption key; and
using the second encryption key to encrypt communications via the second cell.

9. A method as defined in any of claims 6-8, wherein the method further comprises the step of:
receiving an indication of the security area identifier of the first group of cells from the first radio access node.

10. A first radio access node (40) for use in a communication network (32), the first radio access node (40) supporting a plurality of cells that are divided into one or more groups of cells, wherein at least a first group of cells comprises more than one cell, the first radio access node (40) being adapted to:
determine a first access stratum, AS,-base key for a communication device (42) that is to connect to the first radio access node (40) via a first cell in the first group of cells; wherein the first AS-base key is determined using a security area identifier of the first group of cells without a physical cell identifier, PCI, and target physical cell downlink frequency, EARFCN-DL of the first cell;
use the first AS-base key to determine a first encryption key that is to be used to encrypt communications between the communication device (42) and the first radio access node (40) via the first cell; and
use the first encryption key to encrypt communications between the communication device (42) and the first radio access node (40) in the event that the communication device (42) is to connect to the first radio access node (40) via a second cell in the first group of cells.

11. A first radio access node (40) as defined in claim 10, wherein the first radio access node (40) is further adapted to:
determine whether the communication device (42) is to connect to a second cell in the first group of cells;
and wherein the first radio access node (40) is adapted to use the first encryption key to encrypt communications between the communication device (42) and the first radio access node (40) if it is determined that the second cell is in the first group of cells.

12. A first radio access node (40) as defined in claim 11, wherein the first radio access node (40) is further adapted to:
determine a second access stratum, AS,-base key for the communication device (42) using a security area identifier of the group of cells that the second cell is part of if it is determined that the communication device (42) is to connect to a second cell that is not in the first group of cells, wherein the second AS-base key is determined without using the PCI and EARFCN-DL of the second cell.

13. A first radio access node (40) as defined in claim 12, wherein the first radio access node (40) is further adapted to:
determine whether the second cell is a cell that is supported by the first radio access node (40);
use the second AS-base key to determine a second encryption key that is to be used to encrypt communications between the communication device (42) and the first radio access node (40) via the second cell, and use the second encryption key to encrypt communications between the communication device (42) and the first radio access node (40) via the second cell if the second cell is a cell that is supported by the first radio access node (40); and
send the second AS-base key to the radio access node (40) that is supporting the second cell if the second cell is a cell that is not supported by the first radio access node (40).

14. A first radio access node (40) as defined in any of claims 10-13, wherein the first radio access node (40) is further adapted to:
send an indication of the security area identifier of the first group of cells to the communication device (42).

15. A communication device (42), the communication device (42) being adapted to:
determine a first access stratum, AS,-base key for a first cell in a first group of cells from a security area identifier of the first group of cells without a physical cell identifier, PCI, and target physical cell downlink frequency, EARFCN-DL of the first cell, wherein the first group of cells are supported by a first radio access node (40);
use the first AS-base key to determine a first encryption key that is to be used to encrypt communications between the communication device (42) and the first radio access node (40) via the first cell; and
use the first encryption key to encrypt communications between the communication device (42) and the first radio access node (40) in the event that the communication device (42) is to connect to a second cell in the first group of cells.

16. A communication device (42) as defined in claim 15, wherein the communication device (42) is further adapted to:
determine whether the communication device (42) is to connect to a second cell in the first group of cells;
and wherein the communication device (42) is adapted to use the first encryption key to encrypt communications between the communication device (42) and the first radio access node (40) if it is determined that the second cell is in the first group of cells.

17. A communication device (42) as defined in claim 16 wherein the communication device (42) is further adapted to:
determine a second access stratum, AS,-base key using a security area identifier of the group of cells that the second cell is part of if it is determined that the communication device (42) is to connect to a second cell that is not in the first group of cells, wherein the second AS- base key is determined without using the PCI and EARFCN-DL of the second cell;
use the second AS-base key to determine a second encryption key; and
use the second encryption key to encrypt communications via the second cell.

## Patentansprüche

1. Verfahren des Betreibens eines ersten Funkzugangsknotens in einem Kommunikationsnetzwerk, wobei der erste Funkzugangsknoten eine Vielzahl von Zellen unterstützt, die in eine oder mehrere Gruppen von Zellen aufgeteilt sind, wobei mindestens eine erste Gruppe von Zellen mehr als eine Zelle umfasst, wobei das Verfahren Folgendes umfasst:
Bestimmen (901) eines ersten Zugangsschicht (access stratum, AS) -Basisschlüssels für eine Kommunikationsvorrichtung, die mit dem ersten Funkzugangsknoten über eine erste Zelle in der ersten Gruppe von Zellen verbinden soll; wobei der erste AS-Basisschlüssel unter Verwendung einer Sicherheitsbereichskennung der ersten Gruppe von Zellen ohne eine physische Zellkennung (physical cell identifier, PCI) und eine Downlink-Zielfrequenz einer physischen Zelle (target physical cell downlink frequency, EARFCN-DL) der ersten Zelle bestimmt wird;
Verwenden (903) des ersten AS-Basisschlüssels, um einen ersten Verschlüsselungsschlüssel zu bestimmen, der verwendet werden soll, um Kommunikationen zwischen der Kommunikationsvorrichtung und dem ersten Funkzugangsknoten über die erste Zelle zu verschlüsseln; und
im Fall, dass die Kommunikationsvorrichtung mit dem ersten Funkzugangsknoten über eine zweite Zelle in der ersten Gruppe von Zellen verbinden soll, Verwenden (907) des ersten Verschlüsselungsschlüssels, um Kommunikationen zwischen der Kommunikationsvorrichtung und dem ersten Funkzugangsknoten über die zweite Zelle zu verschlüsseln.

2. Verfahren nach Anspruch 1, wobei das Verfahren ferner den folgenden Schritt umfasst:
Bestimmen (905), ob die Kommunikationsvorrichtung mit einer zweiten Zelle in der ersten Gruppe von Zellen verbinden soll;
und wobei der Schritt des Verwendens (907) des ersten Verschlüsselungsschlüssels durchgeführt wird, wenn bestimmt ist, dass die zweite Zelle in der ersten Gruppe von Zellen ist.

3. Verfahren nach Anspruch 2, wobei, wenn bestimmt ist, dass die Kommunikationsvorrichtung mit einer zweiten Zelle verbinden soll, die nicht in der ersten Gruppe von Zellen ist, das Verfahren ferner die folgenden Schritte umfasst:
Bestimmen (909) eines zweiten Zugangsschicht (AS) - Basisschlüssels für die Kommunikationsvorrichtung unter Verwendung einer Sicherheitsbereichskennung der Gruppe von Zellen, der die zweite Zelle angehört, wobei der zweite AS-Basisschlüssel ohne Verwendung der PCI und EARFCN-DL der zweiten Zelle bestimmt wird.

4. Verfahren nach Anspruch 3, wobei das Verfahren ferner die folgenden Schritte umfasst:
Bestimmen, ob die zweite Zelle eine Zelle ist, die durch den ersten Funkzugangsknoten unterstützt wird;
wenn die zweite Zelle eine Zelle ist, die durch den ersten Funkzugangsknoten unterstützt wird, Verwenden (911) des zweiten AS-Basisschlüssels, um einen zweiten Verschlüsselungsschlüssel zu bestimmen, der verwendet werden soll, um Kommunikationen zwischen der Kommunikationsvorrichtung und dem ersten Funkzugangsknoten über die zweite Zelle zu verschlüsseln, und Verwenden des zweiten Verschlüsselungsschlüssels, um Kommunikationen zwischen der Kommunikationsvorrichtung und dem ersten Funkzugangsknoten über die zweite Zelle zu verschlüsseln; und
wenn die zweite Zelle eine Zelle ist, die nicht durch den ersten Funkzugangsknoten unterstützt wird, Senden des zweiten AS-Basisschlüssels an den Funkzugangsknoten, der die zweite Zelle unterstützt.

5. Verfahren nach einem der Ansprüche 1-4, wobei das Verfahren ferner den folgenden Schritt umfasst:
Senden einer Angabe der Sicherheitsbereichskennung der ersten Gruppe von Zellen an die Kommunikationsvorrichtung.

6. Verfahren des Betreibens einer Kommunikationsvorrichtung, wobei das Verfahren Folgendes umfasst:
Bestimmen (1001) eines ersten Zugangsschicht (AS) - Basisschlüssels für eine erste Zelle in einer ersten Gruppe von Zellen unter Verwendung einer Sicherheitsbereichskennung der ersten Gruppe von Zellen ohne eine physische Zellkennung (PCI) und eine Downlink-Zielfrequenz einer physischen Zelle (EARFCN-DL) der ersten Zelle, wobei die erste Gruppe von Zellen durch einen ersten Funkzugangsknoten unterstützt wird;
Verwenden (1003) des ersten AS-Basisschlüssels, um einen ersten Verschlüsselungsschlüssel zu bestimmen, der verwendet werden soll, um Kommunikationen zwischen der Kommunikationsvorrichtung und dem ersten Funkzugangsknoten über die erste Zelle zu verschlüsseln; und
im Fall, dass die Kommunikationsvorrichtung mit einer zweiten Zelle in der ersten Gruppe von Zellen verbinden soll, Verwenden (1007) des ersten Verschlüsselungsschlüssels, um Kommunikationen zwischen der Kommunikationsvorrichtung und dem ersten Funkzugangsknoten über die zweite Zelle zu verschlüsseln.

7. Verfahren nach Anspruch 6, wobei das Verfahren ferner den folgenden Schritt umfasst:
Bestimmen (1005), ob die Kommunikationsvorrichtung mit einer zweiten Zelle in der ersten Gruppe von Zellen verbinden soll;
und wobei der Schritt des Verwendens (1007) des ersten Verschlüsselungsschlüssels durchgeführt wird, wenn bestimmt ist, dass die zweite Zelle in der ersten Gruppe von Zellen ist.

8. Verfahren nach Anspruch 7, wobei, wenn bestimmt ist, dass die Kommunikationsvorrichtung mit einer zweiten Zelle verbinden soll, die nicht in der ersten Gruppe von Zellen ist, das Verfahren ferner die folgenden Schritte umfasst:
Bestimmen (1009) eines zweiten Zugangsschicht (AS) - Basisschlüssels unter Verwendung einer Sicherheitsbereichskennung der Gruppe von Zellen, der die zweite Zelle angehört, wobei der zweite AS-Basisschlüssel ohne Verwendung der PCI und der EARFCN-DL der zweiten Zelle bestimmt wird;
Verwenden (1011) des zweiten AS-Basisschlüssels, um einen zweiten Verschlüsselungsschlüssel zu bestimmen; und
Verwenden des zweiten Verschlüsselungsschlüssels, um Kommunikationen über die zweite Zelle zu verschlüsseln.

9. Verfahren nach einem der Ansprüche 6-8, wobei das Verfahren ferner den folgenden Schritt umfasst:
Empfangen einer Angabe der Sicherheitsbereichskennung der ersten Gruppe von Zellen von dem ersten Funkzugangsknoten.

10. Erster Funkzugangsknoten (40) zur Verwendung in einem Kommunikationsnetzwerk (32), wobei der erste Funkzugangsknoten (40) eine Vielzahl von Zellen unterstützt, die in eine oder mehrere Gruppen von Zellen aufgeteilt sind, wobei mindestens eine erste Gruppe von Zellen mehr als eine Zelle umfasst, wobei der erste Funkzugangsknoten (40) für Folgendes angepasst ist:
Bestimmen eines ersten Zugangsschicht (AS) - Basisschlüssels für eine Kommunikationsvorrichtung (42), die mit dem ersten Funkzugangsknoten (40) über eine erste Zelle in der ersten Gruppe von Zellen verbinden soll; wobei der erste AS-Basisschlüssel unter Verwendung einer Sicherheitsbereichskennung der ersten Gruppe von Zellen ohne eine physische Zellkennung (PCI) und eine Downlink-Zielfrequenz einer physischen Zelle (EARFCN-DL) der ersten Zelle bestimmt wird;
Verwenden des ersten AS-Basisschlüssels, um einen ersten Verschlüsselungsschlüssel zu bestimmen, der verwendet werden soll, um Kommunikationen zwischen der Kommunikationsvorrichtung (42) und dem ersten Funkzugangsknoten (40) über die erste Zelle zu verschlüsseln; und
Verwenden des ersten Verschlüsselungsschlüssels, um Kommunikationen zwischen der Kommunikationsvorrichtung (42) und dem ersten Funkzugangsknoten (40) im Fall, dass die Kommunikationsvorrichtung (42) mit dem ersten Funkzugangsknoten (40) über eine zweite Zelle in der ersten Gruppe von Zellen verbinden soll, zu verschlüsseln.

11. Erster Funkzugangsknoten (40) nach Anspruch 10, wobei der erste Funkzugangsknoten (40) ferner für Folgendes angepasst ist:
Bestimmen, ob die Kommunikationsvorrichtung (42) mit einer zweiten Zelle in der ersten Gruppe von Zellen verbinden soll;
und wobei der erste Funkzugangsknoten (40) angepasst ist, um den ersten Verschlüsselungsschlüssel zu verwenden, um Kommunikationen zwischen der Kommunikationsvorrichtung (42) und dem ersten Funkzugangsknoten (40) zu verschlüsseln, wenn bestimmt ist, dass die zweite Zelle in der ersten Gruppe von Zellen ist.

12. Erster Funkzugangsknoten (40) nach Anspruch 11, wobei der erste Funkzugangsknoten (40) ferner für Folgendes angepasst ist:
Bestimmen eines zweiten Zugangsschicht (AS) - Basisschlüssels für die Kommunikationsvorrichtung (42) unter Verwendung einer Sicherheitsbereichskennung der Gruppe von Zellen, der die zweite Zelle angehört, wenn bestimmt ist, dass die Kommunikationsvorrichtung (42) mit einer zweiten Zelle verbinden soll, die nicht in der ersten Gruppe von Zellen ist, wobei der zweite AS-Basisschlüssel ohne Verwendung der PCI und EARFCN-DL der zweiten Zelle bestimmt wird.

13. Erster Funkzugangsknoten (40) nach Anspruch 12, wobei der erste Funkzugangsknoten (40) ferner für Folgendes angepasst ist:
Bestimmen, ob die zweite Zelle eine Zelle ist, die durch den ersten Funkzugangsknoten (40) unterstützt wird;
Verwenden des zweiten AS-Basisschlüssels, um einen zweiten Verschlüsselungsschlüssel zu bestimmen, der verwendet werden soll, um Kommunikationen zwischen der Kommunikationsvorrichtung (42) und dem ersten Funkzugangsknoten (40) über die zweite Zelle zu verschlüsseln, und Verwenden des zweiten Verschlüsselungsschlüssels, um Kommunikationen zwischen der Kommunikationsvorrichtung (42) und dem ersten Funkzugangsknoten (40) über die zweite Zelle zu verschlüsseln, wenn die zweite Zelle eine Zelle ist, die durch den ersten Funkzugangsknoten (40) unterstützt wird; und
Senden des zweiten AS-Basisschlüssels an den Funkzugangsknoten (40), der die zweite Zelle unterstützt, wenn die zweite Zelle eine Zelle ist, die nicht durch den ersten Funkzugangsknoten (40) unterstützt wird.

14. Erster Funkzugangsknoten (40) nach einem der Ansprüche 10-13, wobei der erste Funkzugangsknoten (40) ferner für Folgendes angepasst ist:
Senden einer Angabe der Sicherheitsbereichskennung der ersten Gruppe von Zellen an die Kommunikationsvorrichtung (42).

15. Kommunikationsvorrichtung (42), wobei die Kommunikationsvorrichtung (42) für Folgendes angepasst ist:
Bestimmen eines ersten Zugangsschicht (AS) - Basisschlüssels für eine erste Zelle in einer ersten Gruppe von Zellen von einer Sicherheitsbereichskennung der ersten Gruppe von Zellen ohne eine physische Zellkennung (PCI) und eine Downlink-Zielfrequenz einer physischen Zelle (EARFCN-DL) der ersten Zelle, wobei die erste Gruppe von Zellen durch einen ersten Funkzugangsknoten (40) unterstützt wird;
Verwenden des ersten AS-Basisschlüssels, um einen ersten Verschlüsselungsschlüssel zu bestimmen, der verwendet werden soll, um Kommunikationen zwischen der ersten Kommunikationsvorrichtung (42) und dem ersten Funkzugangsknoten (40) über die erste Zelle zu verschlüsseln; und
Verwenden des ersten Verschlüsselungsschlüssels, um Kommunikationen zwischen der Kommunikationsvorrichtung (42) und dem ersten Funkzugangsknoten (40) im Fall, dass die Kommunikationsvorrichtung (42) mit einer zweiten Zelle in der ersten Gruppe von Zellen verbinden soll, zu verschlüsseln.

16. Kommunikationsvorrichtung (42) nach Anspruch 15, wobei die Kommunikationsvorrichtung (42) ferner für Folgendes angepasst ist:
Bestimmen, ob die Kommunikationsvorrichtung (42) mit einer zweiten Zelle in der ersten Gruppe von Zellen verbinden soll;
und wobei die Kommunikationsvorrichtung (42) angepasst ist, um den ersten Verschlüsselungsschlüssel zu verwenden, um Kommunikationen zwischen der Kommunikationsvorrichtung (42) und dem ersten Funkzugangsknoten (40) zu verschlüsseln, wenn bestimmt ist, dass die zweite Zelle in der ersten Gruppe von Zellen ist.

17. Kommunikationsvorrichtung (42) nach Anspruch 16, wobei die Kommunikationsvorrichtung (42) ferner für Folgendes angepasst ist:
Bestimmen eines zweiten Zugangsschicht (AS) - Basisschlüssels unter Verwendung einer Sicherheitsbereichskennung der Gruppe von Zellen, der die zweite Zelle angehört, wenn bestimmt ist, dass die Kommunikationsvorrichtung (42) mit einer zweiten Zelle verbinden soll, die nicht in der ersten Gruppe von Zellen ist, wobei der zweite AS-Basisschlüssel ohne Verwendung der PCI und EARFCN-DL der zweiten Zelle bestimmt wird;
Verwenden des zweiten AS-Basisschlüssels, um einen zweiten Verschlüsselungsschlüssel zu bestimmen; und
Verwenden des zweiten Verschlüsselungsschlüssels, um Kommunikationen über die zweite Zelle zu verschlüsseln.

## Revendications

1. Procédé de fonctionnement d'un premier nœud d'accès radio dans un réseau de communication, le premier nœud d'accès radio prenant en charge une pluralité de cellules qui sont divisées en un ou plusieurs groupes de cellules, dans lequel au moins un premier groupe de cellules comprend plus d'une cellule, le procédé comprenant :
la détermination (901) d'une première clef à base de couche d'accès, AS, pour un dispositif de communication qui est destiné à se connecter au premier nœud d'accès radio par l'intermédiaire d'une première cellule dans le premier groupe de cellules ; dans lequel la première clef à base d'AS est déterminée en utilisant un identifiant de zone de sécurité du premier groupe de cellules sans identifiant de cellule physique, PCI, et fréquence de liaison descendante de cellule physique cible, EARFCN-DL, de la première cellule ;
l'utilisation (903) de la première clef à base d'AS pour déterminer une première clef de chiffrement qui est destinée à être utilisée pour chiffrer des communications entre le dispositif de communication et le premier nœud d'accès radio par l'intermédiaire de la première cellule ; et
au cas où le dispositif de communication est destiné à se connecter au premier nœud d'accès radio par l'intermédiaire d'une seconde cellule dans le premier groupe de cellules, l'utilisation (907) de la première clef de chiffrement pour chiffrer des communications entre le dispositif de communication et le premier nœud d'accès radio par l'intermédiaire de la seconde cellule.

2. Procédé selon la revendication 1, dans lequel le procédé comprend en outre l'étape de :
la détermination (905) du fait que le dispositif de communication est, ou n'est pas, destiné à se connecter à une seconde cellule dans le premier groupe de cellules ;
et dans lequel l'étape de l'utilisation (907) de la première clef de chiffrement est réalisée s'il est déterminé que la seconde cellule est dans le premier groupe de cellules.

3. Procédé selon la revendication 2, dans lequel s'il est déterminé que le dispositif de communication est destiné à se connecter à une seconde cellule qui n'est pas dans le premier groupe de cellules, le procédé comprend en outre les étapes de :
la détermination (909) d'une seconde clef à base de couche d'accès, AS, pour le dispositif de communication en utilisant un identifiant de zone de sécurité du groupe de cellules dont la seconde cellule fait partie, dans lequel la seconde clef à base d'AS est déterminée sans utiliser le PCI et la EARFCN-DL de la seconde cellule.

4. Procédé selon la revendication 3, dans lequel le procédé comprend en outre les étapes de :
la détermination du fait que la seconde cellule est, ou n'est pas, une cellule qui est prise en charge par le premier nœud d'accès radio ;
si la seconde cellule est une cellule qui est prise en charge par le premier nœud d'accès radio, l'utilisation (911) de la seconde clef à base d'AS pour déterminer une seconde clef de chiffrement qui est destinée à être utilisée pour chiffrer des communications entre le dispositif de communication et le premier nœud d'accès radio par l'intermédiaire de la seconde cellule, et l'utilisation de la seconde clef de chiffrement pour chiffrer des communications entre le dispositif de communication et le premier nœud d'accès radio par l'intermédiaire de la seconde cellule ; et
si la seconde cellule est une cellule qui n'est pas prise en charge par le premier nœud d'accès radio, l'envoi de la seconde clef à base d'AS au nœud d'accès radio qui prend en charge la seconde cellule.

5. Procédé selon l'une quelconque des revendications 1 à 4, dans lequel le procédé comprend en outre l'étape de :
l'envoi d'une indication de l'identifiant de zone de sécurité du premier groupe de cellules au dispositif de communication.

6. Procédé de fonctionnement d'un dispositif de communication, le procédé comprenant :
la détermination (1001) d'une première clef à base de couche d'accès, AS, pour une première cellule dans un premier groupe de cellules en utilisant un identifiant de zone de sécurité du premier groupe de cellules sans identifiant de cellule physique, PCI, et fréquence de liaison descendante de cellule physique cible, EARFCN-DL, de la première cellule, dans lequel le premier groupe de cellules est pris en charge par un premier nœud d'accès radio ;
l'utilisation (1003) de la première clef à base d'AS pour déterminer une première clef de chiffrement qui est destinée à être utilisée pour chiffrer des communications entre le dispositif de communication et le premier nœud d'accès radio par l'intermédiaire de la première cellule ; et
au cas où le dispositif de communication est destiné à se connecter à une seconde cellule dans le premier groupe de cellules, l'utilisation (1007) de la première clef de chiffrement pour chiffrer des communications entre le dispositif de communication et le premier nœud d'accès radio par l'intermédiaire de la seconde cellule.

7. Procédé selon la revendication 6, dans lequel le procédé comprend en outre l'étape de :
la détermination (1005) du fait que le dispositif de communication est, ou n'est pas, destiné à se connecter à une seconde cellule dans le premier groupe de cellules ;
et dans lequel l'étape de l'utilisation (1007) de la première clef de chiffrement est réalisée s'il est déterminé que la seconde cellule est dans le premier groupe de cellules.

8. Procédé selon la revendication 7 dans lequel, s'il est déterminé que le dispositif de communication est destiné à se connecter à une seconde cellule qui n'est pas dans le premier groupe de cellules, le procédé comprend en outre les étapes de :
la détermination (1009) d'une seconde clef à base de couche d'accès, AS, en utilisant un identifiant de zone de sécurité du groupe de cellules dont la seconde cellule fait partie, dans lequel la seconde clef à base d'AS est déterminée sans utiliser le PCI et la EARFCN-DL de la seconde cellule ;
l'utilisation (1011) la seconde clef à base d'AS pour déterminer une seconde clef de chiffrement ; et
l'utilisation de la seconde clef de chiffrement pour chiffrer des communications par l'intermédiaire de la seconde cellule.

9. Procédé selon l'une quelconque des revendications 6 à 8, dans lequel le procédé comprend en outre l'étape de :
la réception d'une indication de l'identifiant de zone de sécurité du premier groupe de cellules à partir du premier nœud d'accès radio.

10. Premier nœud d'accès radio (40) pour l'utilisation dans un réseau de communication (32), le premier nœud d'accès radio (40) prenant en charge une pluralité de cellules qui sont divisées en un ou plusieurs groupes de cellules, dans lequel au moins un premier groupe de cellules comprend plus d'une cellule, le premier nœud d'accès radio (40) étant adapté pour :
déterminer une première clef à base de couche d'accès, AS, pour un dispositif de communication (42) qui est destiné à se connecter au premier nœud d'accès radio (40) par l'intermédiaire d'un première cellule dans le premier groupe de cellules ; dans lequel la première clef à base d'AS est déterminée en utilisant un identifiant de zone de sécurité du premier groupe de cellules sans identifiant de cellule physique, PCI, et fréquence de liaison descendante de cellule physique cible, EARFCN-DL de la première cellule ;
utiliser la première clef à base d'AS pour déterminer une première clef de chiffrement qui est destinée à être utilisée pour chiffrer des communications entre le dispositif de communication (42) et le premier nœud d'accès radio (40) par l'intermédiaire de la première cellule ; et
utiliser la première clef de chiffrement pour chiffrer des communications entre le dispositif de communication (42) et le premier nœud d'accès radio (40) au cas où le dispositif de communication (42) est destiné à se connecter au premier nœud d'accès radio (40) par l'intermédiaire d'une seconde cellule dans le premier groupe de cellules.

11. Premier nœud d'accès radio (40) selon la revendication 10, dans lequel le premier nœud d'accès radio (40) est en outre adapté pour :
déterminer le fait que le dispositif de communication (42) est, ou n'est pas, destiné à se connecter à une seconde cellule dans le premier groupe de cellules ;
et dans lequel le premier nœud d'accès radio (40) est adapté pour utiliser la première clef de chiffrement pour chiffrer des communications entre le dispositif de communication (42) et le premier nœud d'accès radio (40) s'il est déterminé que la seconde cellule est dans le premier groupe de cellules.

12. Premier nœud d'accès radio (40) selon la revendication 11, dans lequel le premier nœud d'accès radio (40) est en outre adapté pour :
déterminer une seconde clef à base de couche d'accès, AS, pour le dispositif de communication (42) en utilisant un identifiant de zone de sécurité du groupe de cellules dont la seconde cellule fait partie s'il est déterminé que le dispositif de communication (42) est destiné à se connecter à une seconde cellule qui n'est pas dans le premier groupe de cellules, dans lequel la seconde clef à base d'AS est déterminée sans utiliser le PCI et la EARFCN-DL de la seconde cellule.

13. Premier nœud d'accès radio (40) selon la revendication 12, dans lequel le premier nœud d'accès radio (40) est en outre adapté pour :
déterminer le fait que la seconde cellule est, ou n'est pas, une cellule qui est prise en charge par le premier nœud d'accès radio (40) ;
utiliser la seconde clef à base d'AS pour déterminer une seconde clef de chiffrement qui est destinée à être utilisée pour chiffrer des communications entre le dispositif de communication (42) et le premier nœud d'accès radio (40) par l'intermédiaire de la seconde cellule, et utiliser la seconde clef de chiffrement pour chiffrer des communications entre le dispositif de communication (42) et le premier nœud d'accès radio (40) par l'intermédiaire de la seconde cellule si la seconde cellule est une cellule qui est prise en charge par le premier nœud d'accès radio (40) ; et
envoyer la seconde clef à base d'AS au nœud d'accès radio (40) qui prend en charge la seconde cellule si la seconde cellule est une cellule qui n'est pas prise en charge par le premier nœud d'accès radio (40).

14. Premier nœud d'accès radio (40) selon l'une quelconque des revendications 10 à 13, dans lequel le premier nœud d'accès radio (40) est en outre adapté pour :
envoyer une indication de l'identifiant de zone de sécurité du premier groupe de cellules au dispositif de communication (42).

15. Dispositif de communication (42), le dispositif de communication (42) étant adapté pour :
déterminer une première clef à base de couche d'accès, AS, pour une première cellule dans un premier groupe de cellules à partir d'un identifiant de zone de sécurité du premier groupe de cellules sans identifiant de cellule physique, PCI, et fréquence de liaison descendante de cellule physique cible, EARFCN-DL de la première cellule, dans lequel le premier groupe de cellules sont prises en charge par un premier nœud d'accès radio (40) ;
utiliser la première clef à base d'AS pour déterminer une première clef de chiffrement qui est destinée à être utilisée pour chiffrer des communications entre le dispositif de communication (42) et le premier nœud d'accès radio (40) par l'intermédiaire de la première cellule ; et
utiliser la première clef de chiffrement pour chiffrer des communications entre le dispositif de communication (42) et le premier nœud d'accès radio (40) au cas où le dispositif de communication (42) est destiné à se connecter à une seconde cellule dans le premier groupe de cellules.

16. Dispositif de communication (42) selon la revendication 15, dans lequel le dispositif de communication (42) est en outre adapté pour :
déterminer le fait que le dispositif de communication (42) est, ou n'est pas, destiné à se connecter à une seconde cellule dans le premier groupe de cellules ;
et dans lequel le dispositif de communication (42) est adapté pour utiliser la première clef de chiffrement pour chiffrer des communications entre le dispositif de communication (42) et le premier nœud d'accès radio (40) s'il est déterminé que la seconde cellule est dans le premier groupe de cellules.

17. Dispositif de communication (42) selon la revendication 16 dans lequel le dispositif de communication (42) est en outre adapté pour :
déterminer une seconde clef à base de couche d'accès, AS, en utilisant un identifiant de zone de sécurité du groupe de cellules dont la seconde cellule fait partie s'il est déterminé que le dispositif de communication (42) est destiné à se connecter à une seconde cellule qui n'est pas dans le premier groupe de cellules, dans lequel la seconde clef à base d'AS est déterminée sans utiliser le PCI et la EARFCN-DL de la seconde cellule ;
utiliser la seconde clef à base d'AS pour déterminer une seconde clef de chiffrement ; et
utiliser la seconde clef de chiffrement pour chiffrer des communications par l'intermédiaire de la seconde cellule.
